# EUROPÄISCHE PATENTSCHRIFT

(11) **EP 0 929 741 B1**
(45) Veröffentlichungstag und Bekanntmachung des Hinweises auf die Patenterteilung: **02.07.2003**
(21) Anmeldenummer: 98947384.8
(22) Anmeldetag: 04.08.1998
(51) Int. Cl.: F02M 53/06

(54) **VORRICHTUNG ZUR KRAFTSTOFFVORHEIZUNG FÜR EINE KOLBEN-BRENNKRAFTMASCHINE MIT KRAFTSTOFFHEISSVERDAMPFUNG**
FUEL PREHEATER FOR A PISTON INTERNAL COMBUSTION ENGINE WITH HEAT VAPORIZATION OF THE FUEL
DISPOSITIF POUR PRECHAUFFER LE CARBURANT DESTINE A UN MOTEUR A PISTON A COMBUSTION INTERNE, PAR EVAPORATION A CHAUD DU CARBURANT

(30) Priorität: 05.08.1997 DE 19733803
(43) Veröffentlichungstag der Anmeldung: 21.07.1999
(73) Patentinhaber: Kalla, Markus, 35683 Dillenburg (DE)
(72) Erfinder: KALLA, Markus, 35683 Dillenburg (DE); KALLA, Josef, D-79761 Waldshut-Tiengen (DE)
(86) Internationale Anmeldenummer: DE9802252
(87) Internationale Veröffentlichungsnummer: WO99007992

(56) Entgegenhaltungen:
- DE-A- 3 017 591
- DE-A- 19 500 184
- FR-A- 2 174 504
- US-A- 4 458 655
- PATENT ABSTRACTS OF JAPAN vol. 014, no. 013 (M-918), 11. Januar 1990 & JP 01 257758 A (ISUZU MOTORS LTD), 13. Oktober 1989

## Beschreibung

Die Erfindung betrifft eine Vorrichtung zur Kraftstoffvorheizung in der Start- und Kaltlaufphase einer Kolben-Brennkraftmaschine mit Kraftstoffdirekteinspritzung und Kraftstoffheißverdampfung, die aus mindestens einer Eispritzdüse mit einem verlängerten Düsenhalterschaft und einem eingebauten und druckunabhängig gesteuerten Ventil, sowie mindestens einer beliebig betriebenen Glühkerze besteht.

Eine Vorrichtung nach dem Oberbegriff des Anspruchs 1 ist zum Beispiel aus der Druckschrift US 4 458 655 A bekannt.

Aus dem deutschen Patent DE 195 00 184 C2 ist eine Kolben-Brennkraftmaschine mit Kraftstoffdirekteinspritzung und Kraftstoffheißverdampfung bekannt. Durch Führung des Einspritzdüsenschaftes durch den Auslaßkanal sowie den Einsatz einer Kraftstoffpumpe mit konstantem Druck in Verbindung mit druckunabhängig gesteuerten Ventilen, wurden die Voraussetzungen geschaffen, um den Kraftstoff unmittelbar vor dem Brennvorgang in den Zustand eines Kraftstoffdampfes umwandeln zu können und hierdurch zu einer erheblich effizienteren Verbrennung zu gelangen. Die Folgen davon können u.a. sein: eine wesentliche Leistumgssteigerung der Brennkraftmaschine, geringerer Verbrauch sowie eine Reduzierung der Abgaswerte.

Dieses System funktioniert allerdings nur bei entsprechender Betriebstemperatur einwandfrei. In der Start- bzw. Kaltlaufphase kann durch die noch nicht im ausreichenden Maße gegebene Erwärmung des Düsenhalterschaftes keine Erhitzung des darin befindlichen Kraftstoffes erfolgen, demnach aber auch keine Umwandlung in Kraftstoffdampf beim Übergang in den Brennraum. Der Kraftstoff wird hier lediglich zerstäubt, was wesentlich schlechtere Brennbedingungen zu Folge hat; die Maschine läuft unruhig, verbraucht mehr Kraftstoff und stößt mehr Schadstoffe aus.

Die DE 26 46 069 Al offenbart ebenfalls eine Einrichtung zum Vorwärmen des Kraftstoffes in dem Ventilkörper/Düsenhalterschaft des Einspritzventils. Die Vorwärmung erfolgt hierbei durch eine elektrisch beheizbare Heizdrahtwendel, die in einem geschlossenen Isoliermantel um den Ventilkörper/Düsenhaltershaft des Einspritzventils herum angeordnet ist.

Eine solche Einrichtung ist allerdings nur wenig praxisgerecht, da die Erwärmung des Kraftstoffes im Inneren des Ventilkörpers(Kraftstoffkammer) nur zögerlich vorangehen kann, aufgrund der Tatsache, daß die Wärme zuvor den Isolierkörper und insbesondere die Düsenhalterschaftswandung passieren muß. Wegen der Verwendung eines druckabhängigen Ventils ist darüber hinaus eine Erhitzung des Kraftstoffes auf eine Temperatur, die oberhalb der Siedetemperatur bei Atmospärendruck liegt, in diesem System ausgeschlossen.

Um dieser Problematik zu begegnen, wird daher eine Vorrichtung nach dem Anspruch 1 vorgeschlagen, die den Kraftstoff innerhalb des Düsenhalterschaftes auf die Temperatur bringt, die weit über der Siedetemperatur bei Atmosphärendruck liegt, bevor die Verbrennungswärme der Brennkraftmaschine zu diesem Zweck zur Verfügung steht.

Dies geschieht im wesentlichen durch den Einbau einer Glühkerze in den Düsenhalterschaft, so daß sie bis in das Innere (d.h. bis in die entsprechend modifizierte Kraftstoffkammer des Ventilkörpers) hineinragt, und damit einen direkten Kontakt zum Kraftstoff aufweist. Durch diese Maßnahme läßt sich äußerst schnell der im Düsenhalterschaft befindliche Kraftstoff auf die erforderliche Temperatur bringen.

Es wird somit bereits in der Start- bzw. Kaltlaufphase eine nahezu optimale Kraftstoffverteilung erreicht, die die Effizienz des Brennvorgangs und demzufolge auch der gesamten Brennkraftmaschine weiterhin nicht unerheblich steigert. Die ausdrücklich umweltschonenden Folgen (geringerer Kraftstoffverbrauch, saubere Abgase) dürften bei dieser Erfindung letztendlich eine herausragende Rolle spielen.

## Patentansprüche

1. Vorrichtung zur Kraftstoffvorheizung in der Start- und Kaltlaufphase einer Kolben-Brennkraftmaschine mit Kraftstoffdirekteinspritzung und Kraftstoffheißverdampfung
bestehend aus mindestens einer Einspritzdüse mit verlängertem Düsenhalterschaft und einem eingebauten und druckunabhängig gesteuerten Ventil, sowie mindestens einem Heizelement, welches in den Düsenhalterschaft eingebaut ist
***dadurch gekennzeichnet,***
**daß** der Ventilkörper eine Kraftstoffkammer aufweist und daß das Heizelement eine Glühkorze ist, welche bis in die Kraftstoffkammer des Ventilkörpers hineinragt,
und damit einen direkten kontakt zum kraftstoff aufweist, so
**daß** der dort befindliche Kraftstoff in der Start- un Kaltlaufphase auf eine Temperatur, die weit über der Siedetemperatur bei Atmospärendruck liegt, erhitzt werden Kann.

## Claims

1. Device for preheating fuel in the start-up and cold-run phase of a piston combustion engine with direct injection and hot evaporation of fuel, consisting of at least one injection jet with an extended jet holder shaft and a built-in valve controlled independently of pressure and at least one heating element which is built into the jet holder shaft, **characterised by** the fact
that the body of the valve has a fuel chamber and that the heating element is a glow plug which projects into the fuel chamber of the valve body and thus has direct contact with the fuel, so that, in the start-up and cold-run phase, the fuel there can be heated up to a temperature which is far above boiling temperature under atmospheric pressure.

## Revendications

1. Dispositif de préchauffage de carburant au cours de la phase de démarrage et de marche à froid d'un moteur à combustion interne avec injection directe de carburant et évaporation de carburant à chaud, comprenant au moins un injecteur avec porte-injecteur prolongé et une soupape intégrée et commandée indépendamment de la pression et au moins un élément de chauffage qui est intégré dans le porte-injecteur, **caractérisé par le fait que** la soupape présente une chambre à carburant et que l'élément de chauffage est une bougie à incandescence qui pénètre jusque dans la chambre de carburant de la soupape et a donc un contact direct avec le carburant de telle manière que le carburant qui s'y trouve puisse être chauffé au cours de la phase de démarrage et de marche à froid à une température qui se situe bien au-dessus de la température d'ébullition sous pression atmosphérique.
